Europäisches Patentamt

European Patent Office

Office européen des brevets

(11) Veröffentlichungsnummer: **0 294 657**

**A2**

(12) **EUROPÄISCHE PATENTANMELDUNG**

(21) Anmeldenummer: **88108402.4**

(22) Anmeldetag: **26.05.88**

(51) Int. Cl.4: **G06F 3/16**

(30) Priorität: **11.06.87 US 60473**

(43) Veröffentlichungstag der Anmeldung:
**14.12.88 Patentblatt 88/50**

(84) Benannte Vertragsstaaten:
**AT BE CH DE ES FR GB GR IT LI LU NL SE**

(71) Anmelder: **FROESSL, Horst**
**Gutenbergstrasse 2-4**
**D-6944 Hemsbach(DE)**

(72) Erfinder: **FROESSL, Horst**
**Gutenbergstrasse 2-4**
**D-6944 Hemsbach(DE)**

(74) Vertreter: **EGLI-EUROPEAN PATENT**
**ATTORNEYS**
**Horneggstrasse 4**
**CH-8008 Zürich(CH)**

(54) Verfahren und Einrichtung zur Daten- und Ebenbildmanipulation durch Sprach- und Berührungsbefehle.

(57) Das Verfahren zur Eingabe von Befehlen an eine Datenverarbeitungsanlage zur Aenderung der Anzeige schliesst die Wiedererkennung von Stimmen mit ein. Bei einer Ausführungsform wird der Bildschirm in Sektoren aufgeteilt, wobei der Speicher, welcher Datenbits zur Anzeige liefert funktionell in entsprechender Weise aufgeteilt wird. Die Bedienungsperson äussert Befehle zur Sektoridentifizierung und zwecks Aenderung. Eine Vorrichtung zur Wiedererkennung der Stimme liefert erkannte Adressinformation sowie Befehle an einen Assembler, von welchem Befehle zur Anlage ausgehen. Bei einer weiteren Ausführungsform wird ein auf Berühren oder Antippen ansprechender Bildschirm in Verbindung mit gesprochenen Befehlen benutzt. Die Einrichtung ist insbesondere zur Vorbereitung von Material für Mikroform-Speicherung geeignet und für die Disposition von Dokumententinhalten, in Speichern verwaltete Daten, elektronische Post und Desktop publishing.

## Verfahren und Einrichtung zur Daten- und Ebenbildmanipulation durch Sprach- und Berührungsbefehle

Die Erfindung betrifft eine Einrichtung zur Daten- und Ebenbildmanipulation durch Sprach- und Berührungsbefehle und insbesondere eine verbesserte Einrichtung, mittels welcher eine Person Daten in einer Datenverarbeitungsanlage identifizieren, ändern und hinzufügen kann.

Dieses Patentgesuch ist eine "Continuation-in-Part" der US-Patentanmeldung Nr. 573,945, eingereicht am 26. Januar 1984, erteilt am 16. Februar 1988 und schliesst Verbesserungen, der im U.S. Patent 4,553,261 dargelegten und beanspruchten Einrichtung ein, deren Inhalt durch Bezugnahme in das vorliegende Gesuch aufgenommen wurde.

Normalerweise werden bei einer Bearbeitung mittels einem Computer oder einem Computerterminal die Befehle oder Daten über eine Tastatur von einer Bedienungsperson eingegeben. Daten können aber auch gleichzeitig oder zu einem anderen Zeitpunkt über automatische Lesegeräte, Sensoren, andere Computer oder andere Geräte oder Apparate eingegeben werden, jedoch werden in den weitaus meisten Fällen die Daten von einer Bedienungsperson über eine Tastatur eingegeben, wobei in einigen Spezialfällen eine "Maus", ein Lichtgriffel oder Bildschirmberührung zu Hilfe genommen werden.

Dies ist deshalb nicht überraschend, weil die Tastatur das wirksamste Mittel zur Dateneingabe für sehr viele Situationen darstellt. Sie ermöglicht eine schnelle und relativ einfache Uebersetzung der menschlichen Sprache und Gedanken in eine Maschinensprache oder in einen Zwischenkode, von welchem die Maschinensprache sogleich mittels eines Assemblers abgeleitet werden kann.

Wenn man von den seltenen und speziellen Fällen absieht, in welchen ein Lichtgriffel, eine Maus oder dergleichen verwendet wurde, besitzt die Tastatur als Eingabegerät einige Nachteile, und zwar besonders als alleiniges Eingabegerät in einigen Situationen. Zu diesen Nachteilen gehört die Tatsache, dass die Tastatur die Hände der Bedienungsperson belegt und die gleichzeitige Verwendung der Hände für andere Aufgaben reduziert oder verhindert. Die Verwendung der Tastatur verlangt ferner Uebung und Kenntnisse in der Anordnung der Tasten und der Folge der Eingabe wie auch eine manuelle Geschicklichkeit, wobei die erforderliche Gewandtheit, Uebung und Fähigkeit von der auszuführenden Aufgabe abhängen.

Alleinige Verwendung der Tastatur als Eingabegerät ist insbesondere dann nachteilig, wenn die Bedienungsperson andere Dokumente durchschauen oder auf diese hinweisen muss, während sie mit der Tastatur beschäftigt ist. Zusätzlich wäre eine Lösung äusserst vorteilhaft, bei der eine Person an einer Stelle mit Entscheidungsfunktion mit dem Computer arbeiten könnte, ohne dabei die Tastatur bedienen zu müssen. Zudem ist die Tastatur bei einigen Arten von Invalidität eher ein Hindernis als eine Hilfe.

Obschon verschiedene Versuche mit direkter Stimmeingabe an Datageräten erwogen und durchgeführt wurden, wird diese Lösung oft als untaugliche Alternative zur Tastatur angesehen und als eine Art technische Kuriosität betrachtet. Deshalb wird diese bestehende technische Fähigkeit nicht genutzt.

Aufgabe der vorliegenden Erfindung ist die Schaffung von vorteilhaften Verfahren zur Verwendung der menschlichen Stimme als Eingabe zu Anlagen zur Datenverarbeitungsanlage sowohl für Kontrolle als auch zum Zwecke der begrenzten Dateneingabe, und weiter die Verwendung der Stimme als Eingabe von Daten und Instruktionen unter denjenigen Umständen, in welchen es - schneller und wirksamer ist als die Eingabe mittels Tastatur oder anderer Verfahren.

Die Erfindung umfasst auch eine Einrichtung zur Durchführung des Verfahrens, in welcher die Stimme als Eingabe in Verbindung mit anderen Eingabeverfahren, beispielsweise Bildschirmberührung, verwendet werden kann.

Zusammengefasst besteht die Erfindung in einem Verfahren zur Verwendung einer Stimmeingabe zu einem Gerät zur Datenverarbeitung derjenigen Art, welche mit einem visuellen Anzeigeschirm ausgestattet ist, wobei eine Vorrichtung zur Anzeige von selektierbaren Ebenbildern auf dem Schirm vorgesehen ist, wobei man einen Satz von visuellen Aufteilungen auf dem Schirm vorsieht, die den Schirm in Sektionen aufteilen, die eindeutig mit einem oder mehreren alphanumerischen Symbolen beschrieben werden können und eine Speicherstelle für Datenbits vorgesehen ist, von welchen eine Darstellung auf dem Schirm erzeugt werden kann. Die Speicherstelle ist funktionell in eine Vielzahl von Speicherstellen aufgeteilt, deren Anzahl mindestens der Anzahl von Sektionen des Schirmes entspricht, so dass die Adresse der Speicherstellen funktionell auf die Ebenbilddarstellungen auf dem Schirm bezogen werden können. Ein auf Stimmen ansprechender Wandler dient zur Umwandlung der empfangenen Aeusserungen in elektrische Signale, welche Sprachmuster darstellen und in einem Sprachmusterwörterbuch mit einer Vielzahl von Aeusserungen gespeichert sind, wobei die Aeusserungen die alphanumerischen Symbole einschliessen, welche die Sektoren und vorgewählte Instruktionen identifizieren. Die vom Wandler empfangenen Sprachmuster werden mit dem gespeicherten Wörterbuch von Mustern verglichen, wobei Eingaben von wiedererkannten Aeusserungen, entweder als eine Instruktion oder Sektoridentifikation mit nachfolgender Instruktion erzeugt werden und zusammenpassende Muster als Wiedererkennung einer Aeusserung definiert werden. Einer Wiedererkennung folgt die Ausführung eines empfangenen Befehls, der sich auf einen bestimmten Sektor bezieht, wenn ein spezifischer Sektor identifiziert wird.

Nachfolgend werden Ausführungsbeispiele des Gegenstandes der Erfindung anhand der Zeichnung näher erläutert. Es zeigen:

Fig. 1 ein Blockschaltbild einer Einrichtung gemäss einer ersten Ausführungsform der vorliegenden Erfindung,

Fig. 2 ein erstes vereinfachtes Diagramm zur Erläuterung der verwendeten Sektortechnik,

Fig. 3 ein zweites Diagramm, wie Fig. 2,

Fig. 4 ein drittes Diagramm, wie Fig. 2,

Fig. 5 ein Flussdiagramm einer bestehenden Technik zur Sprachwiedererkennung in Blockform und

Fig. 6 ein schematisches Blockdiagramm einer Einrichtung gemäss einer zweiten Ausführungsform der vorliegenden Erfindung.

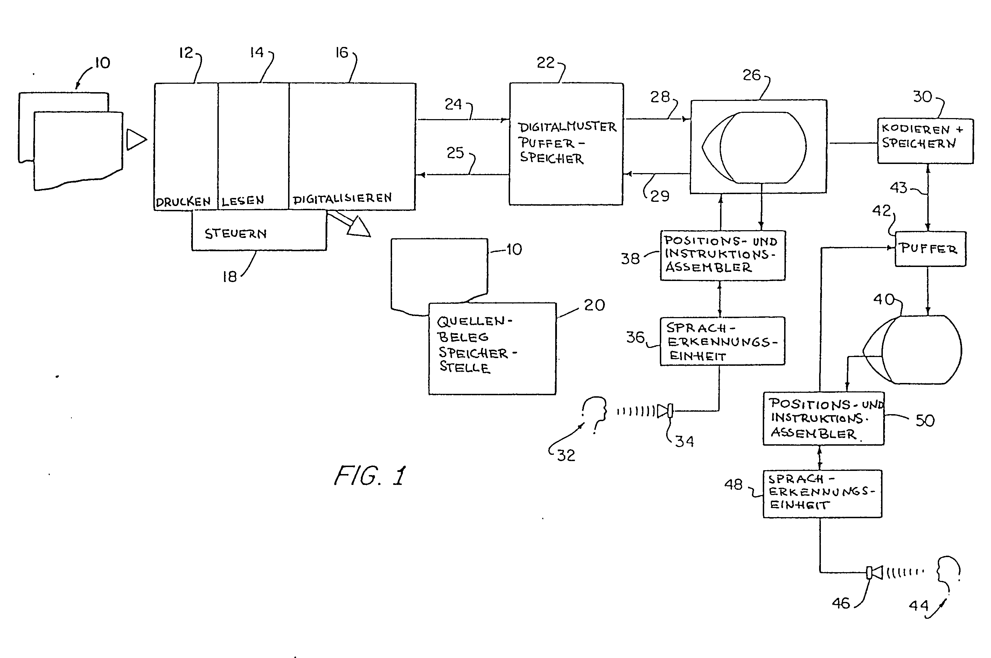

In Fig. 1 ist eine Einrichtung dargestellt, deren erster Teil demjenigen des vorgenannten US-Patentes Nr. 4,553,261 entspricht. Bei dieser Einrichtung werden Dokumente 10, die Text mit oder ohne Graphiken enthalten, in einer Folge einem Drucker 12 zugeführt, in dem sie mit einem identifizierenden Kode versehen werden. Danach werden sie einem Lesegerät 14 zugeführt, das jedes zugeführte Dokument optisch abtastet. Ein Digitalumsetzer 16 bildet einen Bestandteil des Lesegerätes 14 und erzeugt Digitalsignale, welche digitale Annäherungsmuster der Buchstaben, Zahlen und graphischen Darstellungen erzeugen, die auf einem Quellen-Dokument 10 erscheinen. Die Druck-, Lese- und Digitalisierungsfunktion werden von einer Steuerungsvorrichtung 18 überwacht, die normalerweise als Teil des Lesegerätes 14 und Digitalumsetzers 16 geliefert wird und leicht zur zusätzlichen Steuerung der Druckerfunktion angepasst werden kann. Nach dem Drucken, Lesen und Digitalumwandeln werden die Dokumente 10 einer Quellenbeleg-Speicherstelle 20 für Dokumente zugeführt, wo sie, sofern erforderlich, für eine nachfolgende Ueberprüfung zur Verfügung stehen, von wo sie aber normalerweise nicht entfernt werden.

Der Digitalumsetzer 16 ist in beiden Richtungen mit einem Pufferspeicher 22 für digitale Muster auf Kanäle 24 und 25 zwecks Kommunikation verbunden, welche zur Datenübertragung und Rückkopplung bezüglich zur Verfügung stehenden Speicherplatzes und anderen Bedienungsfunktionen dienen. Die im Speicher 22 gespeicherten Muster werden einer Anzeigevorrichtung 26 zugeführt, die eine herkömmliche CRT-Anzeige sein kann, wobei die Anzeigevorrichtung 26 mit dem Speicher 22 auf Kanälen 28 und 29 im Informationsaustausch steht.

Ein Hauptzweck dieses Teils der Einrichtung, die im vorgenannten Patent erläutert ist, besteht in der Darstellung der Muster vom Quellen-Dokument 10 in Digitalform an der Anzeige 26, damit verschiedene Formen der Disposition der Dokumente an dieser Stufe bestimmt und erreicht werden können. Zusätzlich zu den durch Abtasten der Originale abgeleiteten Mustern, sind von einem Uebermittlungssystem wie z.B. durch elektronische Post empfangene Muster oder vorher abgespeichertes Material mit eingeschlossen. Eine besondere Funktion ist die Auswahl von gewissen Informationseinheiten aus jedem Quellendokument, so dass die Muster in einem Standard-Digitalcode, wie z.B. ASC11, kodiert werden können und in einem Massendigitalspeicher 30 gespeichert werden können. Deshalb kann es für eine Bedienungsperson passend sein, eine Tastatur zu bedienen, von der aus die Anzeige 26 sichtbar ist, damit diese Person Positionsanzeiger zur Festlegung und Identifizierung von zu speicherndem Material poistionieren kann, wonach nur der ausgewählte Teil kodiert wird, während der Rest vom digitalen Speicher entfernt wird, wodurch die Speicherkapazität optimal ausgenutzt wird.

Es bestehen aber viele andere Umstände, unter welchen das direkte Verhältnis der Bedienungsperson mit einer Tastatur nicht die wirksamste Lösung darstellt.

Gemäss der vorliegenden Erfindung wird die Bedienungsperson 32 mit einem auf Sprache ansprechenden Wandler ausgestattet, einschliesslich einem Empfänger 34, einer Spracherkennungsvorrichtung 36 und einen Assembler 38, der zur Ueberwachung von bestimmten Funktionen der Anzeige 26 angeschlossen ist. Die Spracherkennnungsvorrichtung 36 kann elektrische Sprachsignale, erzeugt von einem Mikrofon 34, auf Grund von akustischen Aeusserungen durch die Bedienungsperson aufnehmen. In der Spracherkennnungsvorrichtung 36 ist eine definierte Anzahl von Verarbeitungsschritten gespeichert und sie ist ferner in der Lage, bestimmte Aeusserungen innerhalb eines definierten Lexikons als alphanumerische Symbole und vorbestimmte Instruktionen, die Teil der definierten Anzahl Schritte sind zu identifizieren. Nicht erkannte Aeusserungen können nur eine visuelle Anzeige oder eine hörbare Anzeige erzeugen, welche "nicht erkannt" bedeutet. Die erkannten Aeusserungen werden dem Assembler 38 zugeführt, in dem sie mittels der eine bestimmte Aufgabe ausführenden Anzeige 26 implementiert werden, indem die Anzeige 26 veranlasst wird, den instruktionsgemässen Verarbeitungsschritt auszuführen.

Ein Vorteil dieser Einrichtung wird dann erkennbar, wenn man berücksichtigt, dass diejenige Person, welche die Substanz im Dokument 10 betrachtet, Entscheidungen bezüglich ihrer Disposition treffen muss, wobei meistens Bezugnahme auf verschiedene andere Dokumente zur Identifizierung von Personen, Stellen und andere Informationen erforderlich ist, die einen schnellen Entscheidungsprozess ermöglichen. Mit einer begrenzten Anzahl von Sprachbefehlen ist es für jemand möglich, ihre oder seine Hände frei zu halten, um diese oder jene Aufgabe auszuführen, während er oder sie Instruktionen an den Bildschirm 26 mittels der beschriebenen Einrichtung erteilen. Als ein Beispiel von einfachen Befehlen gilt, dass es viel schneller ist, eine Anzeige zu zentrieren, wenn sie nicht zentriert ist, indem "rechts", "oben" o.dgl. ausgesprochen wird. Eine viel schnellere Bewegung des Positionsanzeigers ist durch Befehle wie "spring nach" gefolgt von einer Linie oder einer anderen Identifikation einer Stellung im Text möglich.

Dise Vorgehensweise kann auch durch Verwendung einer Spracheingabe zusammen mit anderen Eingabe- oder Befehlsgeräten benutzt werden. Dabei sind die Systeme für die Berührung des Bildschirms besonders wichtig, weil es der Bedienungsperson die Identifizierung der auf dem Schirm abgebildeten Darstellungen oder Stellen dadurch ermöglicht, dass sie mit einem Finger berührt wird. Der Schirm reagiert deshalb auf diese Berührung, weil Drähte in die Schirmstruktur eingebettet sind oder weil Infrarot-Sensoren mit dem Schirm verbunden sind und auf den Finger der Bedienungsperson oder z.B. einen Lichtgriffel ansprechen. Die Berührung kann aber nur eine Identifikationsfunktion erfüllen, wobei eine Instruktion in Bezug auf das, was zu machen ist, durch andere Mittel erfolgen muss. Dabei ist eine Stimmeingabe in Verbindung mit der Berührung zur Abgabe von Instruktionen besonders nützlich.

Wenn beispielsweise ein Satz für eine Speicherung gewählt wird, kann die Bedienungsperson die Leerstellen vor und nach dem Satz berühren, wobei sie verbal Instruktionen in Verbindung mit der Berührung ausgibt. Wenn der Satz zwischen den Punkten A und B liegt, ist diese Folge möglich:

sprechen SELECT
berühren A
berühren B

Um zu zeigen, wie die Datenverarbeitung durch die Verwendung des beschriebenen Verfahrens entscheidend beschleunigt werden kann, soll die Lage eines Mangers betrachtet werden, der verschiedene Dokumente erhält und jedes einzelne überprüfen muss, über seine Disposition entscheiden sowie eine Instruktion herausgeben muss. Schon ein relativ begrenztes Wörterbuch von bekannten Wörtern in der Stimmenerkennungseinrichtung ermöglicht dem Manager grosse Flexibilität bei der Durchsicht. Die Dokumente werden zuerst abgetastet (oder als elektronische Post übermittelt oder aus dem Speicher abgerufen), so dass Signale, die digitalisierte Muster darstellen, die von den Zeichenebenbildern oder von in den Dokumenten enthaltenen Graphiken abgeleitet sind, gebildet und wenigstens temporär gespeichert werden. Der Bildschirm der Anzeigevorrichtung am Arbeitsplatz des Managers ist berührungsempfindlich, d.h. er spricht an auf Antippen mit dem Finger oder mit einem anderen Gegenstand, wie z.B. ein Stift oder Lichtgriffel. Der Bildschirm kann entsprechend geneigt werden, so dass er nahezu horizontal ist, so dass er eine Oberfläche hat, die beim Antippen leichter erreichbar ist. Die Ebenbilder werden auf dem Bildschirm in jeder beliebigen Reihenfolge dargestellt. Der Manager sieht jedes Ebenbild durch, trifft eine Entscheidung über die Disposition und überträgt diese Entscheidung mit Hilfe einer kombinierten Verwendung von Berührung und Stimme oder auch nur mit Hilfe der Stimme.

Bei einem Dokument könnte er gegenüberliegende Ecken des Dokumentes berühren, um damit den ganzen Bildschirm zu identifizieren und dann sagen "Wiedervorlage 15. Mai". Diese Worte, vorausgesetzt sie sind vom Wörterbuch erkennbar, können in Verbindung mit einem Ebenbild gespeichert werden oder einer Identifizierung davon, und für den automatischen Datumsaufruf verwendet werden. Als Alternative kann der Manger Instruktionen wie "senden nach ...", "ausdrucken", "Ablage" verwenden und kann ein Ebenbild ganz oder teilweise für eine Anweisung auswählen. Verschiedene Teile des gleichen Bildes können verschieden behandelt werden, indem ein Teil ausgewählt wird für "senden nach ...", ein anderer für "ausdrucken". Diese Anweisungen werden schnell durchgeführt mit Hilfe alltäglicher Handlungen wie Zeigen und Sprechen oder auch nur durch Sprechen, wobei die Rückkehr zur Tastatur oder dergleichen nur in ungewöhnlichen Situationen notwendig ist, die nicht im Wörterbuch abgespeichert sind.

Ein weiteres Anwendungsbeispiel ist ein Sachbearbeiter für Bestellungen. Er kann die Ueberprüfung einer Adresse oder einer Rabattskala verlangen, indem er auf den Artikel zeigt und sagt "überprüfen", dann kann er auf den Bestimmungsort zeigen und sagen "senden nach" und auf ähnliche Weise überprüfen, ob die bestellten Artikel auf Lager sind und dann die Bestellung zur Abwicklung weitersenden, indem das ganze Ebenbild bezeichnet wird und er sagt "ausfüllen". Ein Ingenieur kann das Verfahren ähnlich verwenden mit CAD (computer-aided design), indem er auf die Anfangs- und Endpunkte zeigt und "Linie" sagt, und so bewirkt, dass zwischen diesen Punkten eine Linie gezogen wird. Die Software, um eine Linie zu ziehen zwischen zwei Punkten, die identifiziert sind durch die Position des Positionsanzeigers oder durch Koordinatenidentifizierung, ist bekannt. Andere Anwendungsbeispiele werden dem Fachmann einfallen.

Die gleiche grundsätzliche Annäherungsweise kann zur Wahl von graphischen Bildern zum Kodieren und zur Speicherung für andere Zwecke verwendet werden. Eine besonders nützliche Funktion der gesamten Einrichtung ist die Fähigkeit zur Neuordnung der Folge von Datenfeldern. Wenn beispielsweise angenommen wird, dass eine Bestellung für eine Anzahl von Produkten eintrifft, in der das Bestellformat zuerst das Datum, zweitens die Bestellnummer des Kunden, drittens seinen Namen, viertens die Menge, fünftens die Modellnummer des Produkts und sechstens den Preis nennt, so ist es möglich, dass der Empfänger diese Reihenfolge zwecks Speicherung ändern möchte. Der Empfänger kann beispielsweise wünschen, dass der Name des Kunden an erster Stelle, die Modellnummer an zweiter, die Menge an dritter usw. gespeichert werden. Diese Neuordnung der Reihenfolge für Speicherzwecke ist leicht durchführbar, indem das Bild des Originaldokumentes am Bildschirm 26 dargestellt und der Name des Kunden berührt wird und dann z.B. "speichern" ausgesprochen wird, wonach die Modellnummer berührt und "speichern" usw. in der gewünschten Reihenfolge wiederholt werden.

Ein weiteres Beispiel betrifft die Umordnung der Reihenfolge oder Anordnung von Segmenten bei Desktop Publishing. Bei diesem Verfahren können Text oder graphische Darstellungen vergrössert oder verkleinert werden, um in eine gleichermassen identifizierte Position eingepasst zu werden.

Bei graphischen Darstellungen ist es besonders nützlich, ausgewählte Ausschnitte von Darstellungen vergrössern und verkleinern zu können, so dass sie leichter gesehen und eingepasst werden können, innerhalb der Auflösungsgrenzen der Geräte, und dies ist auch nützlich mit Text, denn kleinere Ausschnitte daraus können leichter identifiziert werden.

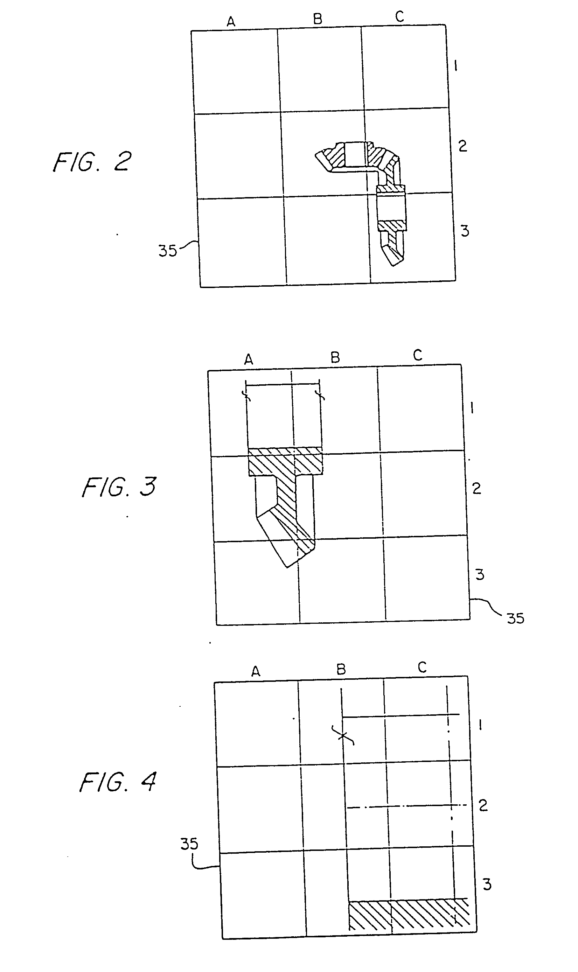

Gemäss der Erfindung ist ein Gittersystem nach Fig. 2, 3 und 4 zu verwenden. In Fig. 2 erscheint ein Ebenbild auf dem Bildschirm, in vereinfachter Form als Quadrat 35, dargestellt. Vertikale und horizontale Linien sind am Schirm entweder permanent ausserhalb oder mittels Videozeilengenerator innerhalb vorhanden, wobei die vertikalen und horizontalen Linien durch alphanumerische Symbole gemäss Fig. 2 identifiziert sind. Es wird angenommen, dass die Bedienungsperson eine Vergrösserung desjenigen Teils eines Bildes wünscht, der sich als Fig. 2 im Kästchen C3 befindet. Dazu braucht die Bedienungsperson nur zu sagen "C,3, ganzer Schirm", weil diese Aeusserung als Instruktion zur Vergrösserung von C3 auf die ganze Schirmgrösse, wie dies in Fig. 3 gezeigt ist, ausgelegt wird. Dieses Verfahren kann von der Bedienungsperson wiederholt werden, indem sie "A,1, ganzer Schirm" ausspricht, wonach das im Quadrat A1 gezeigte Material derart vergrössert wird, dass es die ganze Schirmfläche belegt, wie es in Fig. 4 gezeigt ist. Dieser Teil kann dann gespeichert werden oder auch ein Teil davon kann von der Bedienungsperson gespeichert werden, indem sie "B,2, speichern" ausspricht.

Es wird darauf hingewiesen, dass diese Instruktionen lediglich Beispiele darstellen, und dass andere Formen von Kodewörtern verwendet werden können. Es ist nur notwendig, dass ein Vergleichswörterbuch erstellt wird.

Die Bewegung des Positionsanzeigers ist viel schneller und andere Formen von Prüfung und Aktivität sind ebenfalls viel schneller, wenn diese Technik statt Tastaturbedienung benutzt wird.

Der Betrieb der Einrichtung kann weiter verstanden werden, indem die Vorgehensweise in der beabsichtigten Verwendung erweitert wird. Ein Hauptziel besteht im erlaubten Zugriff für ausgewählte Personen zu den Ebenbildern von Dokumenten, die im Speicher 30 gespeichert sind. Nehmen wir beispielsweise an, dass eine Person in einer Entscheidungsfunktion einen Bildschirm 40 mit einem Pufferspeicher 42 erhält, der in beiden Richtungen über ein Kabel 43 mit einem Speicher 30 verbunden ist. Die Person 44 ist mit einem Mikrofon 46, einer Spracherkennungseinheit 48 und einem Stellen und Befehlsassembler 50, welcher mit dem Pufferspeicher 42 verbunden ist, ausgestattet. Durch einen entsprechenden Befehl werden diejenigen Dokumente, welche gemäss einem beliebigen Geschäftskode für eine bestimmte Person 44 vorgesehen sind, vom Speicher 30 zum Pufferspeicher 42 abgerufen und stehen für gleichzeitige oder sequentielle Anzeige zur Verfügung. Mittels einer einfachen Gruppe von Befehlen kann die Person 44 die Disposition von verschiedenen Dokumenten dadurch festlegen, dass sie die bestimmten Dokumente entweder zum Speicher, ohne Bearbeitung retourniert, einer anderen Person im Betrieb zuführt oder jemandem ausserhalb des Betriebs zuleitet oder auch sonstwie behandelt. Bezugnahme auf Adressen durch die in den Fig. 2, 3 und 4 identifizierten Sektoren ist möglich, wobei die tatsächliche Anzahl von Unterteilungen auf dem Bildschirm normalerweise etwas höher ist als in den Fig. 2 bis 4 gezeigt ist.

Die in Fig. 1 gezeigte Einrichtung ist auch zur Berichtigung von Text oder in begrenztem Umfang zur Hinzufügung von Daten geeignet. Aus dem vorgenannten US-Patent geht hervor, dass eine weitere, von der Bedienungsperson 32 ausgeführte Funktion während der Betrachtung des digitalisierten Textes vor dem Kodieren und Speichern darin beteht, Buchstaben einzufügen, welche nicht vom Leser 14 erkannt wurden oder Buchstaben und Symbole richtigzustellen, die nicht richtig gelesen wurden. Dies ist eine Funktion, die viel schneller mit der Stimme als mit der herkömmlichen Tastatur durchführbar ist, indem Befehle, wie "Positionsanzeiger springen bis" mit nachfolgender Stelle erteilt werden. Wenn beispielsweise das Schirmgitter durch horizontale Linien in fünf Sektionen und durch vertikale Linien in vier Sektionen aufgeteilt ist, kann ein Befehl "A1 Positionsanzeiger springen bis B4" bewirken, dass er in eine Zone bewegt wird, wo richtiggestellt werden muss oder die zusätzliche Daten erforderlich machen, wobei der ganze Vorgang viel schneller abläuft als bei der herkömmlichen Tastatur. Eine weitere Verfeinerung der Stellung ist durch Befehle "links, rechts" oder mittels Tastendruck möglich. Eine Rückpositionierung des Positionsanzeigers ist ebenfalls durch eine Kombinationssteuerung mittels Stimme und Berührung z.B. dadurch möglich, dass der Positionsanzeiger an einer zu diesem Zeitpunkt bestehenden Stelle berührt und der Stimmbefehl "spring bis" erteilt wird, wonach die neue Stelle berührt wird. Korrekturen im Text können durch blosses Zeigen auf das falsche Zeichen während einer Korrekturphase und durch Aussprechen des richtigen Zeichens ausgeführt werden. Das Hinzufügen von Text ist nur innerhalb derjenigen Grenzen möglich, die durch die Grösse und die Vorbedingung durch das Lexikon bestimmt sind, obschon es offensichtlich ist, dass Buchstaben und Zahlen ohne Schwierigkeiten hinzugefügt werden können, weil sie fundamental notwendige Symbole darstellen, die durch die Erkennungsvorrichtung 36 oder 48 erkannt werden können.

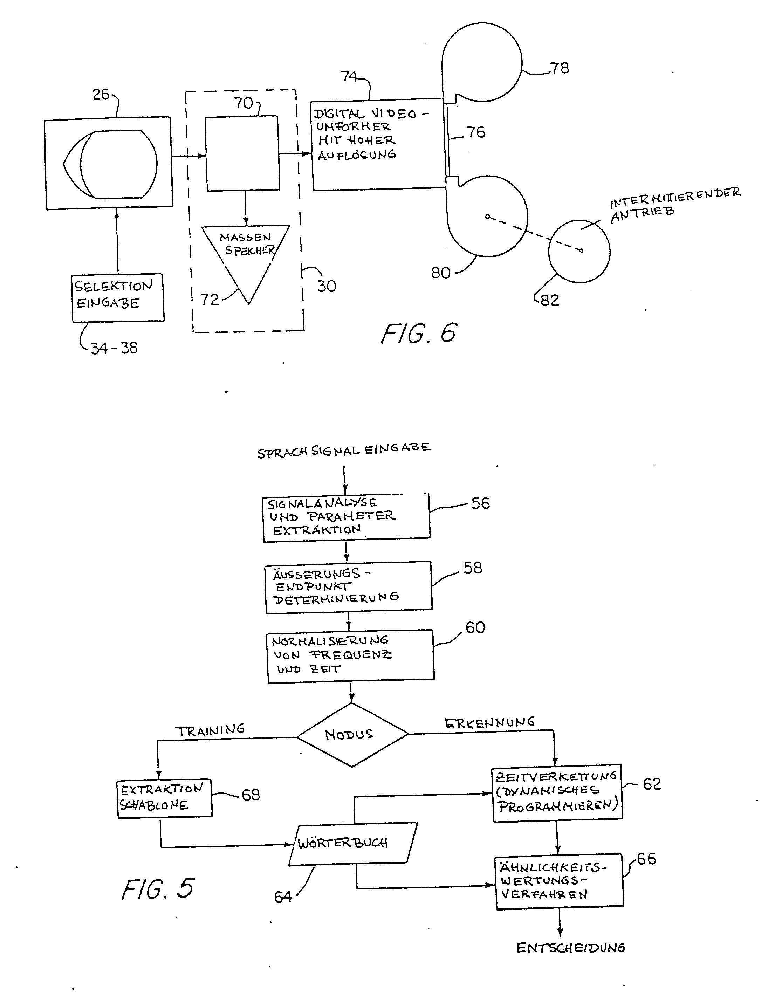

Eine typische Einrichtung zur Wiedererkennung der Sprache ist in Fig. 5 dargestellt, bei der ein Sprach-Eingangssignal in elektrischer Form vom Mikrofon 34 oder 46 empfangen wird. Dieses Signal wird einer Analyse und einem Mustervergleichsverfahren unterworfen, bei dem die Signalanalyse und eine Gewinnung von Parametern in Block 56 stattfindet. Ein Hauptproblem bei den Einrichtungen zur Wiedererkennung von Sprachen besteht im allgemeinen in den einzelnen Wortendungen. Somit besteht die nächste Stufe 58 in einer Bestimmung des Endes der jeweiligen Aussprache. Eine nächste Stufe 60 ist die Normalisierung von Frequenz und Zeit, nach der im Erkennungszustand das Signal einer Zeitverkettung unterworfen wird, welche eine Art des dynamischen Programmierens darstellt, von dem mehrere Beispiele bestehen. Ein Wörterbuch 64 ist mit Aeusserungsmustern versehen, welche die Einrichtung wiedererkennen soll, und diese Muster werden mit den verarbeiteten Sprachsignalen verglichen, wobei die Ausdehnung der Aehnlichkeit in einem Aehnlichkeitswertungsverfahren 66 festgestellt wird. Die daraus resultierende Entscheidung gibt an, ob eine Instruktion oder ein alphanumerisches Symbol wiedererkannt wird oder nicht, wonach ein passender Hinweis abgegeben wird. Derartige Einrichtungen werden normalerweise einem Trainierungsverfahren unterworfen, in dem die kennzeichnenden Formate der Stimme der Bedienungsperson wiedererkannt und gespeichert werden als Teil des Wörterbuches, wobei normalerweise Durchschnittswerte einer grossen Anzahl von wiederholten Aussagen des gleichen Ausdruckes gebildet werden, so dass die Einrichtung nachher im Stande ist, gesprochene Ausdrücke von der gleichen Person wiederzuerkennen. Eine sehr hohe Genauigkeit ist mit einem sehr begrenzten, von der gleichen Person besprochenen Wörterbuch erreichbar, wobei der Genauigkeitsgrad mit anderen Personen abnimmt. Die Kombination aus Stimme und Berührung oder nur Stimme kann ferner zur Erzeugung von graphischen Illustrationen am Bildschirm verwendet werden. Dabei verlangt die Herstellung von "Zeichnungen" am Bildschirm nur mit Hilfe der Tastatur, dass man mit dem spezifischen Computer und mit der Programmiersprache gut vertraut ist. Mit der Stimme allein oder mit der Stimme und Bildschirmberührung wird viel Lernzeit eliminiert. Die Bedienungsperson kann weitgehend untrainiert sein mit Ausnahme des Erlernens eines kleinen Wörterbuches mit Befehlswörtern.

Wenn beispielsweise eine Linie zwischen zwei Punkten gezogen werden soll, braucht die Bedienungsperson nur die beiden Punkte zu berühren und das im Wörterbuch angegebene Befehlswort auszusprechen, das als "Linie" definiert ist. Die Berührungen und der Befehl liefern alle Informationen, die normalerweise in die Tastatur eingegeben werden, d.h. die Endpunkte in einem kartesischen Koordinatensystem und Instruktionen zum Ziehen einer Linie in einer relativ grossen Anzahl von Tastaturanschlägen. Es ist wichtig zu bemerken, dass normalerweise keine Aenderungen im Basisprogramm der Maschine erforderlich sind. Das Programm für graphische Zwecke erkennt normalerweise eine Instruktion, die eine kleine Anzahl von Eingangswörtern einschliesst. Diese Wörter werden vom Assembler geliefert, der notwendigerweise auf die Computersprache und das Betriebssystem als Antwort auf die gesprochenen Befehle abgestimmt ist.

Ein ausgefalleneres Diagramm als eine Linie ist fast ebenso einfach zu zeichnen, zwei Punkte und ein "Kreis"-Befehl genügen zur Definition des Zentrums und des Radius eines Kreises, aber auch Teile gelöscht werden können, indem die gleiche Art von Grenzen definiert werden. Diese Art des Vorgehens erfordert somit weniger Fertigkeit als bei der Verwendung einer Tastatur.

In Fig. 6 ist ein weiterer Aspekt der vorliegenden Erfindung gezeigt, bei dem die Selektion und das Kodierverfahren ferner zur gesteigerten Mikroform-Speicherung verwendet werden können. Die durch die in Fig. 1 erzielte Auswahl der Teile der Einrichtung ist erneut in Fig. 6 dargestellt, wobei die Kodiervorrichtung 70 und der Speicher 30 in eine Kodiervorrichtung und einen Massenspeicher 72 getrennt werden. Als Sicherheitszubehör oder als Alternative zum Quellendokument-Speicher 20 und als eine redundante Speicherungstechnik zum Massenspeicher 72 ist es wünschenswert, einen Mikrofilm- oder Mikroformspeicher der wichtigsten Teile der eingegangenen Dokumente vorzusehen. Zu diesem Zweck werden die kodierten Signale einem Digital-Video-Umformer 74 mit hoher Auflösung zugeführt, der eigentlich eine umgekehrte Videokamera ist und zur Aufnahme von Digitalsignalen sowie zur Herstellung von Ebenbildern mit hoher Auflösung dient, die durch ein herkömmliches optisches System einem Mikrofilm 76 zuführbar sind, der von einer Vorratsspule 78 abgewickelt einer Aufwickelspule 80 zugeführt wird, das in bekannter Weise von einem Schrittantrieb oder von einem intermittierenden Antrieb 82 angetrieben wird. Obschon ein normaler Spulenfilm dargestellt ist, ist es verständlich, dass Filme jeder Grösse und auch Mikrofiche- oder Mikropunktspeicher, Videodisc oder andere Arten von Massendatenspeichern verwendet werden können.

In der vorangehenden Beschreibung wurden verschiedene vorteilhafte Ausführungsformen erläutert. Es sind aber innerhalb des heutigen technischen Standes eine Reihe von Abweichungen von diesen Ausführungen möglich, die ebenfalls innerhalb des Rahmens der vorliegenden Erfindung liegen.

**Ansprüche**

1. Verfahren zur Lieferung von Befehlen und Eingaben an eine Datenverarbeitungsanlage mit einem visuellen Bildschirm, dadurch gekennzeichnet, dass man:
den Inhalt von Quellendokumenten oder gespeicherten Informationen darstellt und Digitalsignale bildet, die digitalisierte Muster repräsentieren, die abgeleitet sind von jenen Inhalten,
digitale Signale, die digitalisierte Muster darstellen temporär speichert,
eine Reihe von Verarbeitungsschritten definiert, die durchgeführt werden sollen,
eine Anzeigevorrichtung mit einem berührungsempfindlichen Bildschirm verwendet, so dass die Berührung des Bildschirms für die Einrichtung eine Position in einem dargestellten Ebenbild identifiziert, an der einer der definierten Verarbeitungsschritte ausgeführt werden soll,
einen auf Stimmen ansprechenden Wandler zur Umwandlung der empfangenden Aeusserungen in elektrische Signale vorsieht, die Sprachmuster darstellen,
ein gespeichertes Wörterbuch von Sprachmustern mit einer Vielzahl von Aeusserungen, die auch als Befehle erkennbare Aeusserungen einschliessen, bereitstellt, um einen der Schritte der definierten Reihe von Verarbeitungsschritten auszuführen,
ein Ebenbild aus einem Quellendokument auf dem Bildschirm darstellt,
Segmente von gespeicherten Signalen zur weiteren Verarbeitung auswählt, indem man selektiv mindestens eine Position in dem Bildschirmebenbild berührt,
Signale, die vom Wandler empfangene Sprachmuster von Aeusserungen darstellen, mit den im Wörterbuch gespeicherten Mustern vergleicht und eine Maschinenbefehlsausgabe erzeugt als Antwort auf eine erkannte Aeusserung und
die Maschineninstruktion an der durch Berührung identifizierten Position ausführt.

2. Verfahren nach Anspruch 1, bei dem der Schritt der Auswahl von Segmenten die Berührung von zwei Positionen in einem Ebenbild einschliesst, um den Inhalt zwischen den Stellen für die Verarbeitung zu kennzeichnen.

3. Verfahren nach Anspruch 2, das zusätzlich Signale, die digitalisierte Zeichenmuster darstellen nur in ausgewählten Segmenten in Maschinensprache umwandelt und den Maschinenkode und die Signale der digitalisierten Muster für den späteren Gebrauch speichert.

4. Verfahren nach Anspruch 3, bei dem das gespeicherte Wörterbuch ein Muster einschliesst, das als Befehl zum Löschen und Ersetzen von auf dem Bildschirm erscheinenden Zeichen erkennbar ist.

5. Verfahren nach Anspruch 3, bei dem das gespeicherte Wörterbuch ein Muster einschliesst, das als Befehl erkennbar ist, die Position des Positionsanzeigers von einer Stelle zu einer anderen zu ändern.

6. Verfahren nach Anspruch 1, das zusätzlich Signale, die digitalisierte Muster von Zeichen darstellen nur in ausgewählten Segmenten in Maschinencode umwandelt und den Maschinencode und die digitalisierten Muster von Zeichen für den späteren Gebrauch speichert.

7. Verfahren nach Anspruch 1, das zusätzlich Signale, die digitalisierte Muster von Zeichen darstellen nur in ausgewählten Segmenten in Maschinecode umwandelt und den Maschinencode für den späteren Gebrauch speichert.

8. Verfahren nach Anspruch 2, bei dem die Reihe von Verarbeitungsschritten einen Befehl einschliesst, ein ausgewähltes Element an einer gekennzeichneten Position einzufügen.

FIG. 1

EP 0 294 657 A2

FIG. 2

FIG. 3

FIG. 4

FIG. 6

FIG. 5